Europäisches Patentamt

European Patent Office

Office européen des brevets

(11) Publication number: **0 225 310**
**A1**

## EUROPEAN PATENT APPLICATION

(21) Application number: 86870173.1

(22) Date of filing: 24.11.86

(51) Int. Cl.4: **C 08 L 21/00**
//(C08L21/00,9:00)

(30) Priority: 29.11.85 GB 8529410

(43) Date of publication of application:
10.06.87 Bulletin 87/24

(84) Designated Contracting States:
BE DE FR GB IT LU NL

(71) Applicant: **Monsanto Europe S.A.**
**Avenue de Tervuren 270-272 Letter Box 1**
**B-1150 Brussels (BE)**

(72) Inventor: **Leblanc, Jean Leopold**
**94 rue d'Hennuyères**
**B-1421 Bois-Seigneur-Isaac (BE)**

**Swiderski, Zdzislaw**
**124, Avenue Jacques de Meurers**
**B-1150 Brussels (BE)**

(74) Representative: **Lunt, John Cooper et al**
**Monsanto Europe S.A. Patent Department Avenue de**
**Tervuren 270-272 Letter Box No 1**
**B-1150 Brussels (BE)**

(54) Rubber compositions having improved rheological properties.

(57) Polyisoprene oligomers having Mn in the range 4000-6500 and a predominantly linear structure provide an optimum balance of properties as rheological modifiers for rubber. Mixtures of unvulcanised diene rubber and the polyisoprene oligomers exhibit lower power consumption during mixing, better dispersion of fillers and a decreased temperature rise, resulting in improved margins for scorch safety.

**Description**

RUBBER COMPOSITIONS HAVING IMPROVED RHEOLOGICAL PROPERTIES

At various stages during the manufacture of rubber articles, the rheological properties of mixtures containing the rubber are of technical significance. For example, such properties determine the power consumption during mixing with additives such as vulcanising agents, vulcanisation accelerators and reinforcing agents, and also the efficiency of mixing. The flow properties of blends thus produced are important at the next stage when the blends are moulded, particularly when the moulding process is injection moulding. Inadequate flow properties result in surface imperfections or unacceptable dimensional variations in the finished article.

A wide variety of processing aids is known in the rubber technology art, including low molecular weight hydrocarbon polymers derived from monomer units which are the same as or similar to those of the rubber itself. These include oligomers which have been produced by controlled polymerisation of the monomer or monomers, and oligomers produced by the depolymerisation of high molecular weight polymers such as natural rubber itself.

For example Japanese Kokai 77 72.742 discloses that solid rubber compositions containing up to 40%, based on the solid rubber, of liquid isoprene or isoprene-styrene rubber containing not more than 10% of 1,2- and 3,4- linkages have good processability. A composition containing a liquid isoprene rubber having a molecular weight of 2,500, viscosity 5000 CP at 25°C and 35:50:7:8 (cis-1,4):(trans-1,4):(1,2):(3,4) structure is disclosed. Japanese Kokai 79 139954 disclosed that rubber compositions containing 3-15%, based on the rubber, of liquid isoprene rubber having 2-8% 3,4- configuration are resistant to cutting on impact. In an example, it is shown that the use of liquid isoprene rubber (cis-1,4- configuration 94%, 3,4- configuration 6%, average molecular weight 47,000) has improved impact cut resistance in comparison with a similar composition containing a regular plasticizer in place of the liquid rubber.

Japanese 54 007450 describes rubber compositions having improved green strength obtained by masticating natural rubber, liquid low molecular weight polyisoprene and carbon black. Preferred liquid polyisoprenes have viscosity average molecular weights 8,000-100,000, preferably 20,000-70,000, and contain more than 80% of cis-1,4 bonds.

USSR 804,663 describes rubber compositions having improved heat, puncture and wear resistance obtained by adding 5-15 phr of a softener consisting of the thermal degradation products of isoprene rubbers having molecular weights of 7,000-20,000.

Minatomo et al. Kobunshi Ronbunshi, 1978, 35 599-606 report that liquid cis-1,4-polyisoprene of molecular weight $10^4$-$10^5$ has lower viscosity and lower viscosity-temperature dependence than other liquid polymers of similar molecular weight such as polyisobutylene, and is useful as a plasticizer for rubber and adhesives.

We have now found that for polyisoprene oligomers obtained by the depolymerisation of high molecular weight polyisoprenes, an optimum balance of properties as rheological modifiers for rubber is shown by oligomers having Mn in the range 4000-6500 and a predominantly linear structure. These oligomers usually have corresponding Mw values in the range 25,000-35,000. Preferred oligomers have Mn values in the range 4000-6000.

The rubber compositions of the invention are mixtures comprising unvulcanised diene rubber and oligomers as defined above. The invention also includes a process for improving the processability of an unvulcanised diene rubber, which comprises mixing an oligomer as defined above with the rubber.

A preferred class of oligomeric polyisoprenes for use in the present invention is obtained by the process of FR-A-2 259 110, according to which a high molecular weight unsaturated hydrocarbon rubber is depolymerised by reaction with a redox reagent to give oligomers having Mn which may range from 5.000 to 100.000. Variations in process conditions result in oligomers having sub-ranges of Mn within this broad range. The process gives oligomers having a predominantly linear structure.

Diene rubbers useful in the present invention include natural and synthetic polyisoprenes, polybutadiene and ethylene-propylenediene modified rubber.

The amount of the oligomer to be mixed with the unvulcanised rubber according to the invention can vary, depending on the properties of the rubber and the extent of modification required, but is usually from 1 to 10 parts by weight per 100 parts by weight of rubber. Often an objective is to improve the rheological properties of the rubber or of mixtures containing the rubber while affecting as little as possible the physical properties of vulcanisates subsequently prepared from the oligomer/rubber blends. In such cases, the optimum amount of oligomer is usually found to be within the range 1.5 to 5, for example 2 to 4, parts by weight of the oligomer per 100 parts by weight of rubber.

The oligomers useful in the present invention can be mixed with the diene rubber using conventional mixing equipment, for example an internal mixer such as a Banbury. When other ingredients are to be blended with the rubber, especially solids in relatively large amounts, for example reinforcing agents, it is generally found advantageous to add the oligomer fairly early in the mixing cycle. The dispersion of the reinforcing agent is then facilitated.

The improvements in rheological properties obtained by the present invention are associated in particular with the following features. A lower overall power consumption is required to obtain a homogeneous dispersion of fillers in the rubber/oligomer blends compared with other compositions from which the oligomer is absent or in which other processing aids are used; the temperature rise during mixing is less than with such other compositions, so that there is an improved safety margin for the avoidance of scorch in compositions containing vulcanising ingredients.

The invention is illustrated by the following Examples:

Example 1

Natural rubber SMR10 was premasticated before masterbatch mixing to obtain a uniform starting polymer. The premastication was carried out in a laboratory scale Banbury mixer for 7-8 minutes at a final rubber temperature of 145°C. A masterbatch having the following composition in parts by weight was then prepared in a laboratory scale Banbury mixer:

Premasticated SMR10 100
N 330 carbon black 50
Zinc oxide 5
Stearic acid 2
Processing oil 3
Liquid Natural Rubber 3

Power input was monitored during mixing of the masterbatch using a Power Integrator, and mixing was stopped when the total power input was 660 Wh. A similar masterbatch, but without the liquid natural rubber, was prepared as a control. Several such masterbatches were prepared using liquid natural rubbers having various molecular weights. For comparison with each masterbatch, a control masterbatch was prepared from the same sample of premasticated natural rubber. Various characteristics of the mixing process were recorded in each case as shown in the Table below. Also the viscosities of each masterbatch and its corresponding control were measured using a Mooney viscometer and by means of the Monsanto Processability Tester (MPT), from which measurements of die swell were also obtained.

To examine the effect of the liquid natural rubbers on vulcanisates, samples of masterbatches were mixed with additives as follows in parts by weight per 100 parts of rubber:

N-cyclohexylbenzothiazole-2-sulphenamide 1.2
N,N-dithiomorpholine 1.5
Sulphur 0.6

The behaviour of the mixtures thus obtained was studied in the Monsanto Rheometer. Samples of vulcanisates for physical testing were prepared by standard methods.

In the table below, the key characteristics of the control and increases (+) or reductions (-) due to the presence of liquid natural rubbers (LNR) are reported. The changes are expressed in percentages against results for the control masterbatch prepared and tested at the same conditions. This explains the range rather than exact values of properties given for the control.

|  | Control | LNR1 | LNR2 | LNR3 | LNR4 | LNR5 |
|---|---|---|---|---|---|---|
| $M_v$ |  | 11200 | 9380 | 11300 | 12800 | 16900 |
| $M_n$ |  | 4600 | 6470 | 7130 | 8960 | 9940 |
| $M_w$ |  | 30200 | 33100 | 44400 | 51700 | 73800 |

$M_v$ is the viscosity average molecular weight determined from viscosity measurements.
$M_n$ and $M_w$ are number average and weight molecular weights respectively determined by gel permeation chromatography.

MIXING

| Time | 7.3 min. | +8% | +7% | not affected | | |
| Dump temp. | 169°C | -8-10°C | -3-5°C | not affected | | |

VISCOMETER

| ML (1 + 4) | 54.58 | -19.3% | -18.5% | -7.6% | -10.8% | -8.6% |

RHEOMETER 141°C

| | | | | | |
|---|---|---|---|---|---|
| Max. mod. 38-40 | -5% | -4% | -6% | -6% | -6% |
| T 90, min.31-33 | -5% | -7% | -8% | -7% | -5% |

MPT

Viscosity
Function

$\eta = f(\dot\gamma)$ (average change | Die swell (over range)

| | | | | | |
|---|---|---|---|---|---|
| $\eta = f(\dot\gamma)$ (average change | -10-20% | -10 | -6 -8% | -6 -8% | No effect |
| Die swell (over range | -5-14% | -10-20% | small effects | | No effect |

PHYSICALS

| | | | | | |
|---|---|---|---|---|---|
| T.S., MPa.28-31 | -4.5% | -4.2% | +0.7% | -3.5% | -6% |
| E.B., % 480-525 | +1.5% | +2% | +6.0% | +6.0% | +8% |

HARDNESS IRHD

| | | | | | |
|---|---|---|---|---|---|
| 62-66 | -4.6% | -1.6% | -3% | -4.6% | -4% |

RESILIENCE

| | | | | | |
|---|---|---|---|---|---|
| 62-65 | -3.8% | No effect | No effect | +1.6% | -3% |

TEAR DIE B

| | | | | | |
|---|---|---|---|---|---|
| 164-180 | -9.8% | -16.1% | -4.3% | +1.2% | Very small effect |

These results show that maximum benefits in terms of improved rheological properties (as shown by dump temperature after mixing, Viscometer and MPT) are obtained with the liquid natural rubbers having the lowest molecular weights. Apart from the Tear Die B test, the results show no significantly different effects on physical properties between LNR1 and LNR2 on the one hand and the higher molecular weight liquid natural rubbers on the other.

Example 2
This Example shows a comparison between an oligomer of the invention (LNR) and a commercial liquid oligoisoprene (Kuraway LIR 30 - "LIR") having an Mv of 29000, MN 15700, Mw 29500 and a structure, determined by NMR, 68% cis-1,4, 25% trans-1,4, 7% vinyl-3,4.

Masterbatches having the proportions of components shown in Example 1 were prepared. Compositions of the invention contained 3 parts by weight of LNR per 100 parts by weight of premasticated SMR 10 as in Example 1. Comparative compositions contained 3 parts by weight of LIR instead of the 3 parts by weight of LNR per 100 parts by weight of premasticated SMR 20, and control masterbatches were without LNR or LIR.

Mixing of the masterbatch was carried out in an internal mixer (BR Banbury - 1523cm³) with a constant fill factor of 0.72.

The mixer was connected to a power integrator to measure mixing energy input. The mixing procedure had the following sequence. The initial temperature in the mixer was 50°C. ("rheochemical" means LNR or LIR 30).

| Operation | Power Integrator Reading (kWh) |
|---|---|
| Put premasticated SMR and rheochemical into mixer and start mixing | 0 |
| Add half the carbon black and the zinc oxide | 0.06 |
| Add the remaining carbon black, stearic acid and oil | 0.24 |
| Sweep | 0.46 |
| Dump | 0.66 |

Controls without rheochemical were also mixed and the mixing energy measured.

By dumping the compound at PI = 0.66 KWh, about 2300 MJ/m$^3$ overall mixing energy is consumed. According to experience with such a formulation, this level of mixing energy is generally sufficient to ensure a thorough dispersion of the filler and other compounding ingredients.

All mixing experiments were duplicated in order to assess reproducibility.

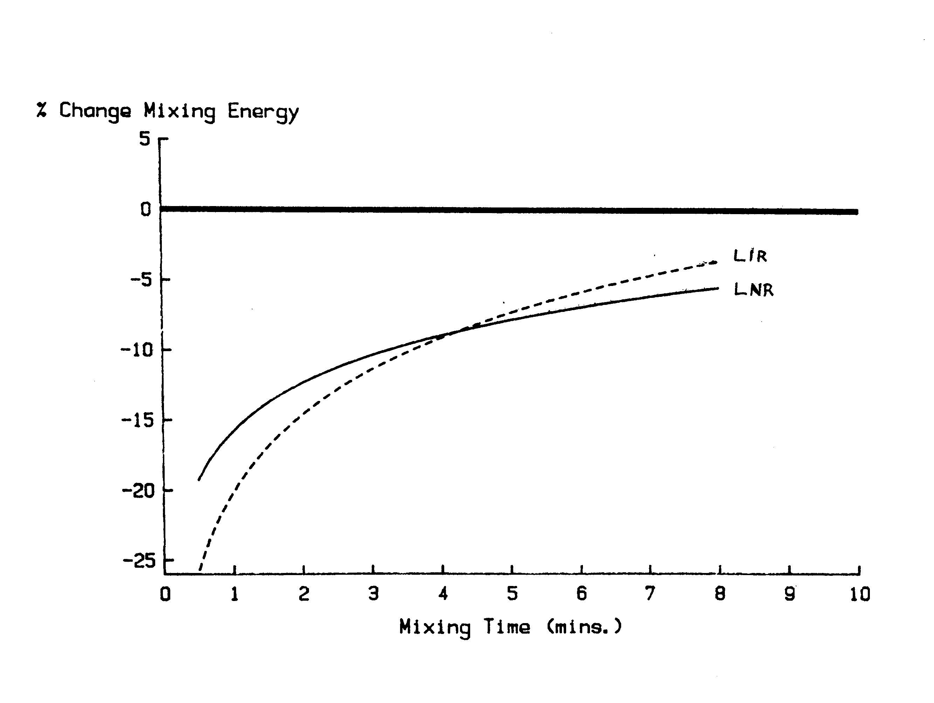

Results of duplicate experiments were averaged and were expressed as a percentage change in the mixing energy at a given time in the mixing sequence relative to the control at the same time. Results are shown graphically in the drawing. During the early stages of mixing, LIR showed a greater reduction in mixing energy than the LNR. However, when taken to the stage corresponding to thorough dispersion of the filler and other compounding ingredients, the LNR showed a greater reduction in overall mixing energy consumption relative to the control than the LIR. It is believed that this advantage is associated with the lower molecular weight and the greater degree of linear structure of the LNR.

**Claims**

1. A composition comprising a mixture of unvulcanised diene rubber and an oligomer of polyisoprene having Mn in the range 4000-6500 and a predominantly linear structure.

2. A composition according to Claim 1 in which the polyisoprene oligomer has Mn in the range 4000-6000.

3. A composition according to either of Claims 1 and 2 in which the polyisoprene oligomer has an Mw in the range 25,000-35,000.

4. A composition according to any of Claims 1 to 3 in which the polyisoprene oligomer is a product of depolymerising natural rubber by reaction with a redox reagent.

5. A composition according to any of Claims 1 to 4 in which the diene rubber is natural rubber.

6. A composition according to any of Claims 1 to 5 in which the amount of polyisoprene oligomer is from 1.5 to 5 parts by weight per 100 parts by weight of diene rubber.

7. A composition according to any of Claims 1 to 6 which also contains a reinforcing agent for the rubber.

8. A process for improving the processability of an unvulcanised rubber, which comprises mixing with the rubber a polyisoprene oligomer having Mn in the range 4000-6500 and a predominantly linear structure.

% Change Mixing Energy

Mixing Time (mins.)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 111 391 (POLYSAR LTD) * Claim 1; page 6, lines 20-24; page 7, line 4 * | 1-8 | C 08 L 21/00 // (C 08 L 21/00 C 08 L 9:00 ) |
| A,D | FR-A-2 259 110 (SOCIETE AUXILIAIRE DE L'INSTITUT FRANCAIS DU CAOUTCHOUC) * Claim 1; page 3, lines 8-9,24-25 * | 4 | |
| X | FR-A-1 347 650 (SHELL) * Abstract; page 2, left-hand column - right-hand column, line 14 * | 1-3,5-8 | |
| X,D | WPI, FILE SUPPLIER, abstract no. 80-22501c, Derwent Publications Ltd, London, GB; & JP-A-54 139 954 (Cat. D) (SUMITOMO RUBBER IND. K.K.) 30-10-1979 * Whole abstract * | 1-3,5-8 | TECHNICAL FIELDS SEARCHED (Int. Cl.4) C 08 L |
| X,D | WPI, FILE SUPPLIER, abstract no. 79-16624B, Derwent Publications Ltd, London, GB; JP-A-54 007 450 (Cat. D) (KURARAY K.K.) 20-01-1979 * Whole abstract * | 1-3,5-8 | |

The present search report has been drawn up for all claims

| Place of search | Date of completion of the search | Examiner |
|---|---|---|
| THE HAGUE | 17-03-1987 | VAN HUMBEECK F.W.C. |

EPO Form 1503 03 82